# FASCICULE DE BREVET EUROPEEN

(11) **EP 3 345 290 B1**
(45) Date de publication et mention de la délivrance du brevet: **10.07.2019**
(21) Numéro de dépôt: 16767326.8
(22) Date de dépôt: 01.09.2016
(51) Int. Cl.: H02K 44/12, H02K 44/08

(54) **GENERATEUR MAGNETOHYDRODYNAMIQUE.**
MAGNETOHYDRODYNAMISCHER GENERATOR
MAGNETOHYDRODYNAMIC GENERATOR

(30) Priorité: 04.09.2015 FR 1558232
(43) Date de publication de la demande: 11.07.2018
(73) Titulaire: Safran Helicopter Engines, 64510 Bordes (FR)
(72) Inventeur: SERGHINE, Camel, 64510 Boeil-bezing (FR); KLONOWSKI, Thomas, 64160 Sedzere (FR); BEDDOK, Stéphane, 64000 Pau (FR); RICHARD, Stéphane, 64800 Haut de Bosdarros (FR)
(74) Mandataire: Cabinet Beau de Loménie
(86) Numéro de dépôt international: PCT/FR2016/052163
(87) Numéro de publication internationale: WO 2017/037388

(56) Documents cités:
- GB-A- 1 078 332
- US-A- 4 785 209

## Description

### Arrière-plan de l'invention

La présente invention concerne le domaine de la magnétohydrodynamique et en particulier son utilisation pour la récupération d'au moins une partie de l'énergie résiduelle du fluide de travail d'une turbine.

On entend par turbine un dispositif rotatif destiné à utiliser l'énergie d'un fluide de travail pour faire tourner un arbre rotatif. L'énergie du fluide de travail, caractérisée par sa vitesse et son enthalpie, est ainsi partiellement convertie en énergie mécanique qui peut être extraite par l'arbre rotatif. Toutefois, le fluide de travail garde normalement, en aval de la turbine, une importante énergie résiduelle. Dans la description qui suit les termes "amont" et "aval" sont définis par rapport au sens de circulation normal du fluide de travail.

Dans la demande de brevet français FR 2 085 190, on a déjà proposé d'utiliser un générateur magnétohydrodynamique en complément d'une turbine pour récupérer de l'énergie contenue dans le fluide de travail de la turbine. Dans un tel générateur magnétohydrodynamique, l'écoulement d'un fluide ionisé, soumis à un champ magnétique en direction perpendiculaire à l'écoulement du fluide ionisé, génère un courant électrique entre deux électrodes espacées l'une par rapport à l'autre dans une autre direction perpendiculaire à l'écoulement du fluide ionisé et au champ magnétique.

Des générateurs magnétohydrodynamiques similaires sont également connus des documents US 4,785,209 et GB 1,078,332.

En pratique, toutefois, l'intégration d'un tel générateur magnétohydrodynamique et d'une turbine n'est pas sans inconvénients, notamment en ce qui concerne l'agencement des électrodes et des moyens de génération du champ magnétique dans une veine d'écoulement du fluide de travail de la turbine.

### Objet et résumé de l'invention

La présente divulgation vise à remédier à ces inconvénients, en proposant un générateur magnétohydrodynamique permettant une intégration plus simple dans un ensemble comprenant une turbine destinée à être actionnée par le même fluide de travail.

Dans au moins un mode de réalisation, ce but est atteint grâce au fait que le générateur magnétohydrodynamique, qui comprend une veine d'écoulement d'un fluide de travail délimitée par une première paroi et une deuxième paroi et un dispositif d'ionisation du fluide de travail, comprend aussi en outre au moins une paire de bras reliant chacun les première et deuxième parois en aval dudit dispositif d'ionisation de manière à délimiter entre lesdits bras et lesdites parois un canal dans la veine d'écoulement disposé pour être traversé par une partie du fluide de travail après sa ionisation, un aimant pour générer un champ magnétique orienté en direction perpendiculaire à l'écoulement du fluide de travail dans le canal délimité par la paire de bras et lesdites parois, et au moins une paire d'électrodes, chacune des électrodes de chaque paire étant disposée d'un côté du canal délimité par la paire de bras et lesdites parois, les électrodes de chaque paire étant espacées l'une par rapport à l'autre dans une direction perpendiculaire audit champ magnétique et à l'écoulement du fluide de travail dans le canal délimité par la paire de bras et lesdites parois. L'aimant peut être un électroaimant, avec éventuellement un solénoïde pouvant être avantageusement à conductivité améliorée grâce à l'intégration de nanotube de carbone dans l'âme du conducteur ou encore être supraconducteur, mais pourrait aussi être un aimant permanent. Dans un cas comme dans l'autre, il pourrait comprendre un noyau laminé.

Grâce à ces dispositions, on facilite l'arrangement des électrodes et des pôles de l'aimant suivant deux axes sensiblement perpendiculaires entre eux et par rapport à l'écoulement du fluide de travail. En outre, on peut se limiter à générer de l'électricité qu'à partir d'une partie du fluide de travail d'une turbine, ce qui peut être souhaité, par exemple, si la turbine est destinée à fournir une puissance mécanique relativement importante, tandis que le générateur magnétohydrodynamique est destinée à fournir une puissance électrique sensiblement plus réduite, à titre auxiliaire.

En particulier, chaque électrode de chaque paire d'électrodes peut être disposée sur un bras de ladite paire de bras. Dans ce cas, pour générer un champ magnétique perpendiculaire à l'écoulement du fluide de travail à la direction dans laquelle les électrodes sont séparées l'une de l'autre, l'aimant peut comprendre un noyau logé à l'intérieur d'un desdits bras. Toutefois, un arrangement alternatif est également envisageable dans lequel chaque électrode de chaque paire serait disposée sur l'une des parois délimitant la veine d'écoulement, l'aimant étant alors arrangé pour générer un champ magnétique orienté dans la direction dans laquelle les bras sont séparées l'un de l'autre.

Afin d'accélérer l'écoulement du fluide dans le canal délimité par les parois et les bras, pour ainsi augmenter le rendement du générateur magnétohydrodynamique, les première et deuxième parois peuvent converger l'une vers l'autre dans un sens d'écoulement des gaz de combustion sur au moins un premier segment de la veine d'écoulement situé en amont de ladite paire de bras. Dans ce cas, et afin d'éviter une poussée importante de réaction, notamment quand le générateur magnétohydrodynamique est installé dans une tuyère de sortie d'un turbomoteur, et en particulier d'un turbomoteur d'aéronef à voilure tournante, les première et deuxième parois peuvent diverger l'une de l'autre dans un sens d'écoulement du fluide de travail sur au moins un deuxième segment de la veine d'écoulement situé en aval de ladite paire de bras, de manière à réduite à nouveau la vitesse d'écoulement.

Afin de permettre l'ionisation efficace du fluide de travail, et en particulier d'un fluide de travail gazeux, ledit dispositif d'ionisation peut prendre la forme d'une torche à plasma. Une telle torche à plasma peut notamment comprendre une paire d'électrodes connectées à un dispositif de génération d'un potentiel électrique continu ou alternatif entre les électrodes de cette paire qui soit égal ou supérieur au potentiel d'ionisation du fluide de travail. Toutefois, d'autres types de dispositifs d'ionisation sont aussi envisageables, comme par exemple un dispositif d'ionisation par injection de micro-ondes, par décharge hélicon ou par couplage inductif. Par ailleurs, pour faciliter l'ionisation du fluide de travail, le générateur peut comprendre un dispositif d'injection d'éléments à bas potentiel d'ionisation en amont dudit dispositif d'ionisation, ainsi qu'éventuellement un filtre de récupération des éléments à bas potentiel d'ionisation en aval du canal délimité par les parois et les bras.

Des distances relativement courtes entre électrodes et pôles magnétiques opposés dans le canal délimité par la paire de bras et les parois peuvent être positives pour le rendement et l'efficacité du générateur magnétohydrodynamique. Pour augmenter la quantité de fluide de travail servant à la génération magnétohydrodynamique, tout en limitant ces dimensions, le générateur peut comprendre une pluralité de paires de bras reliant chacun les première et deuxième parois en aval dudit dispositif d'ionisation et, pour chaque paire de bras, un aimant et une paire d'électrodes. En divisant la génération magnétohydrodynamique d'électricité entre plusieurs canaux, il est possible d'augmenter la puissance électrique tout en maintenant une section d'écoulement restreinte pour chaque canal. Les paires d'électrodes de chaque canal peuvent être connectées électriquement en série ou en parallèle.

Afin d'adapter plus facilement ce générateur magnétohydrodynamique à une turbine, la veine d'écoulement peut être annulaire, lesdites première et deuxième parois étant concentriques autour d'un axe central de la veine d'écoulement, et lesdits bras étant radiaux.

La présente divulgation concerne aussi une turbomachine comprenant au moins un tel générateur magnétohydrodynamique, et au moins une turbine disposée pour être actionnée par le même fluide de travail que le générateur magnétohydrodynamique. Le générateur magnétohydrodynamique peut ainsi servir par exemple à récupérer au moins une partie de l'énergie résiduelle du fluide de travail ne pouvant pas être exploitée par la turbine. Cette turbomachine peut notamment comporter une chambre de combustion en amont de la turbine et du générateur magnétohydrodynamique, pour produire des gaz de combustion à enthalpie élevée formant le fluide de travail de la turbine et du générateur magnétohydrodynamique en aval et dont les hautes températures facilitent leur ionisation. Par ailleurs, pour augmenter l'enthalpie des gaz de combustion et impulser leur écoulement, cette turbomachine peut comprenant au moins un compresseur en amont de la chambre de combustion et une première turbine qui est couplée audit compresseur à travers un premier arbre rotatif pour son actionnement. Elle peut aussi comprendre une deuxième turbine. Dans ce dernier cas, cette deuxième turbine, qui peut notamment être située en aval de la première turbine mais en amont du générateur magnétohydrodynamique, pourrait être couplée à un arbre de sortie pour former un turbomoteur, comme par exemple un turbomoteur d'aéronef à voilure tournante.

Afin de mieux pouvoir exploiter l'énergie résiduelle du fluide de travail qui ne peut pas être exploitée par la turbine, le générateur magnétohydrodynamique peut être disposé dans une tuyère de sortie en aval de la turbine.

La présente divulgation concerne aussi un procédé magnétohydrodynamique de génération électrique dans lequel un fluide de travail est au moins partiellement ionisé par un dispositif d'ionisation dans une veine d'écoulement délimitée par une première et une deuxième paroi, et une partie ionisée du fluide de travail traverse un canal délimité dans la veine d'écoulement par lesdites parois et une paire de bras reliant chacun les première et deuxième parois en aval dudit dispositif d'ionisation, et est soumise à un champ magnétique généré dans ce canal par un aimant en direction perpendiculaire à l'écoulement du fluide de travail, de manière à générer un courant électrique entre des électrodes d'au moins une paire d'électrodes, chacune des électrodes de chaque paire étant disposée d'un côté du canal délimité par la paire de bras et lesdites parois, les électrodes de chaque paire étant espacées l'une par rapport à l'autre dans une direction perpendiculaire audit champ magnétique et à l'écoulement des gaz de combustion dans ce canal. Ce procédé magnétohydrodynamique de génération électrique peut notamment servir à récupérer de l'énergie résiduelle d'un fluide de travail ayant préalablement servi à entraîner au moins une turbine. En particulier, à bord d'un véhicule propulsé par un moteur à turbine, ce procédé magnétohydrodynamique peut servir à générer de l'énergie électrique servant à alimenter des équipements auxiliaires du véhicule autres que le moteur à turbine.

### Brève description des dessins

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
- la figure 1 est une vue schématique en perspective d'un aéronef à voilure tournante avec un turbomoteur équipé d'un générateur magnétohydrodynamique suivant un mode de réalisation ;
- la figure 2 est une vue schématique en coupe longitudinale d'un des turbomoteurs de la figure 1 ;
- la figure 3A est une vue schématique en perspective d'une partie du générateur magnétohydrodynamique du turbomoteur de la figure 2 ;
- la figure 3B illustre un détail de la figure 3A ;
- la figure 4 est une vue schématique en perspective d'un générateur magnétohydrodynamique suivant un deuxième mode de réalisation ;
- la figure 5 est une vue schématique en perspective d'un générateur magnétohydrodynamique suivant un troisième mode de réalisation ;
- la figure 6 est une vue schématique en coupe longitudinale d'un turbomoteur suivant un quatrième mode de réalisation ; et
- la figure 7 est une vue schématique d'un turbomoteur suivant un cinquième mode de réalisation.

### Description détaillée de l'invention

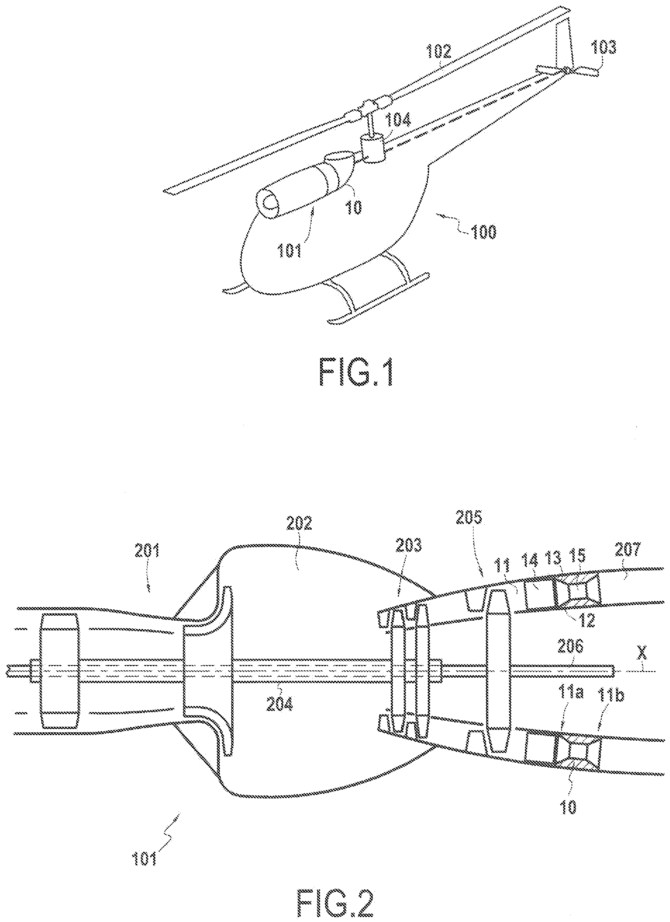

La figure 1 illustre un aéronef à voilure tournante, plus précisément un hélicoptère 100, avec un turbomoteur 101 pour l'actionnement de son rotor principal 102 et son rotor de queue 103 à travers une transmission 104. Le turbomoteur 101 comprend un générateur magnétohydrodynamique 10 suivant un mode de réalisation pour fournir un courant électrique aux différents consommateurs électriques embarqués sur l'hélicoptère 1.

Comme illustré en plus grand détail sur la figure 2, le turbomoteur 101 comprend un générateur de gaz avec, dans le sens d'écoulement de l'air, un compresseur 201, une chambre de combustion 202 avec un allumeur et des injecteurs connectées à un circuit d'alimentation en carburant (non illustrés), et une première turbine 203, couplée au compresseur 201 à travers un premier arbre rotatif 204. En aval de cette première turbine 203, le turbomoteur 101 comprend une deuxième turbine 205 couplée à un deuxième arbre rotatif 206, qui dans l'hélicoptère 1 est couplable à la transmission 104 pour actionner les rotors 102, 103. Finalement, en aval de la deuxième turbine 205, le turbomoteur comprend une tuyère 207 de sortie des gaz de combustion.

Dans ce premier mode de réalisation, le générateur magnétohydrodynamique 10 est intégré dans cette tuyère 207 en aval des turbines 203, 205. Au sein de ce générateur magnétohydrodynamique 10, la veine annulaire 11 d'écoulement des gaz de combustion qui constituent, dans ce mode de réalisation, le fluide de travail des turbines 203, 205 et du générateur magnétohydrodynamique 10, est délimitée par une première paroi 12, interne, et une deuxième paroi 13, externe et concentrique à la première paroi 12 autour de l'axe central X du turbomoteur 101. Le générateur magnétohydrodynamique 10 comprend aussi un dispositif 14 d'ionisation des gaz de combustion. Ce dispositif d'ionisation 14 peut être, par exemple, une torche à plasma avec deux électrodes configurées pour créer un champ électrique entre elles, champ électrique suffisamment puissant pour ioniser les gaz de combustion circulant à des températures et vitesses élevées à travers la veine annulaire 11 pour créer un plasma froid électriquement conducteur. Ce champ électrique fort peut être continu ou alternatif, un champ alternatif permettant d'éviter un déséquilibre thermique du plasma froid. Pour faciliter l'ionisation des gaz de combustion, le turbomoteur 101 peut comprendre aussi un dispositif d'injection d'éléments à bas potentiel d'ionisation, comme le potassium, en amont du dispositif d'ionisation. Ce dispositif d'injection d'éléments à bas potentiel d'ionisation peut notamment être intégré dans le circuit d'alimentation en carburant de manière à ce que les éléments à bas potentiel d'ionisation soient injectés dans la chambre de combustion 202 avec le carburant.

Sur un premier segment 11a de veine annulaire 11 d'écoulement des gaz de combustion au sein de ce générateur magnétohydrodynamique 10, les parois 12, 13 convergent dans le sens d'écoulement des gaz de combustion afin d'accélérer leur écoulement, tandis que sur un deuxième segment 11b, ces parois 12, 13 divergent à nouveau dans le sens d'écoulement des gaz de combustion de manière à réduire leur vitesse avant leur sortie de la tuyère 207. Entre le segment convergent 11a et le segment divergent 11b des paires de bras radiaux 15 relient les parois 12, 13, de manière à former des canaux 16 dans la veine 11, chaque canal 16 étant délimité par les parois 12, 13 et les bras 15 d'une paire. Pour éviter que les éléments à bas potentiel d'ionisation injectés en amont soient ensuite expulsés à l'extérieur, le générateur 10 peut aussi comporter un filtre (non illustré) de récupération des éléments à bas potentiel d'ionisation en aval des canaux 16.

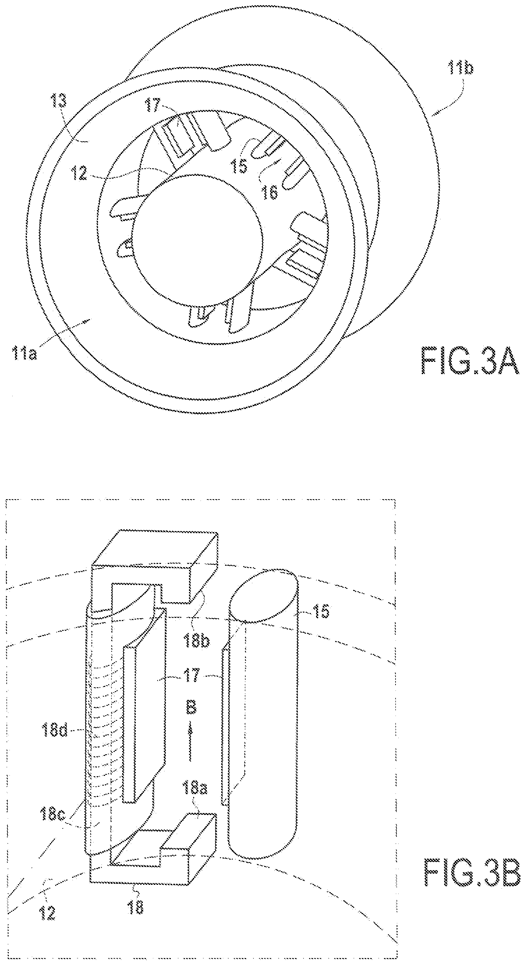

Dans le mode de réalisation illustré en plus grand détail sur les figure 3A, 3B, le générateur magnétohydrodynamique 10 comprend, pour chaque canal 16, au moins une électrode 17 montée sur une face interne de chacun des bras 15 délimitant ce canal 16, de manière à être exposée aux gaz de combustion ionisés traversant ce canal 16, ainsi qu'un électroaimant 18 avec des pôles 18a,18b opposés en direction radiale, couverts respectivement par la paroi interne 12 et la paroi externe 13 d'un côté et d'autre du canal 16, et reliés par un noyau 18c logé dans l'un des bras 15, laminé et entouré par un solénoïde 18d, de manière à générer un champ magnétique B dans le canal 16 qui soit orienté en direction radiale et donc sensiblement perpendiculaire à l'écoulement des gaz de combustion ionisés dans le canal 16. Afin de générer un champ magnétique particulièrement puissant, le solénoïde 18d peut notamment être supraconducteur.

Ainsi, dans ce mode de réalisation, l'écoulement des gaz de combustion ionisés à travers chaque canal 16, soumis au champ magnétique B généré par l'électroaimant 18 peut générer une force électromotrice et donc un courant électrique entre les électrodes 17, situées de chaque côté du canal 16 et donc opposées l'une à l'autre dans une direction perpendiculaire tant à la direction de l'écoulement qu'à la direction du champ magnétique B.

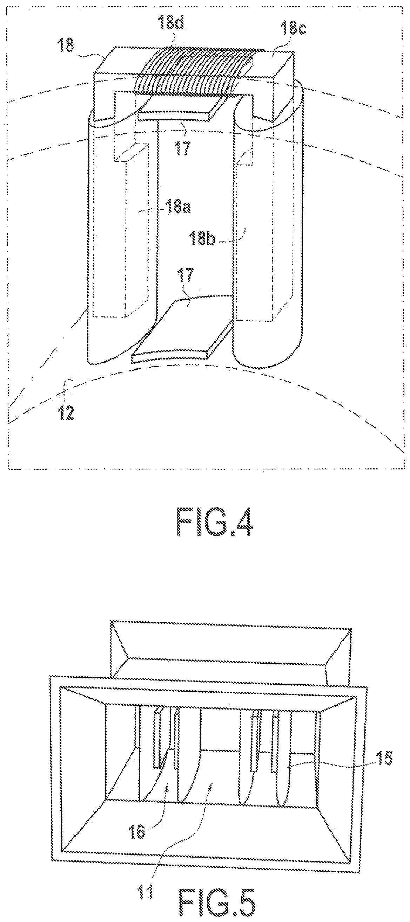

Dans un mode de réalisation alternatif, illustré par la figure 4, l'arrangement des parois 12,13, des bras 15, ainsi que donc des canaux 16 est identique, Toutefois, les électrodes 17 correspondant à chaque canal 16 ne sont pas montées sur les bras 15, mais sur les faces internes des parois 12,13 de manière à être exposées au canal 16, mais opposées en direction radiale, tandis que l'électroaimant 18 est arrangé de manière à générer un champ magnétique B qui soit orienté en direction sensiblement perpendiculaire à cette direction radiale et à la direction d'écoulement des gaz de combustion ionisés. Les autres éléments du générateur magnétohydrodynamique 10 sont analogues à ceux du premier mode de réalisation et reçoivent les mêmes repères sur le dessin.

Bien que la veine d'écoulement 11 soit annulaire dans ces deux modes de réalisation, afin de faciliter (Intégration du générateur magnétohydrodynamique 10 dans le turbomoteur 101, d'autres formes sont également envisageables, par exemple pour intégrer le générateur magnétohydrodynamique 10 dans une tuyère plate. Ainsi, dans un autre mode de réalisation alternatif, illustré sur la figure 5, la veine d'écoulement 11 a une section rectangulaire, mais le générateur magnétohydrodynamique suivant ce troisième mode de réalisation est en tout autre point analogue à celui du premier mode de réalisation, et les éléments équivalents reçoivent les mêmes repères sur cette figure.

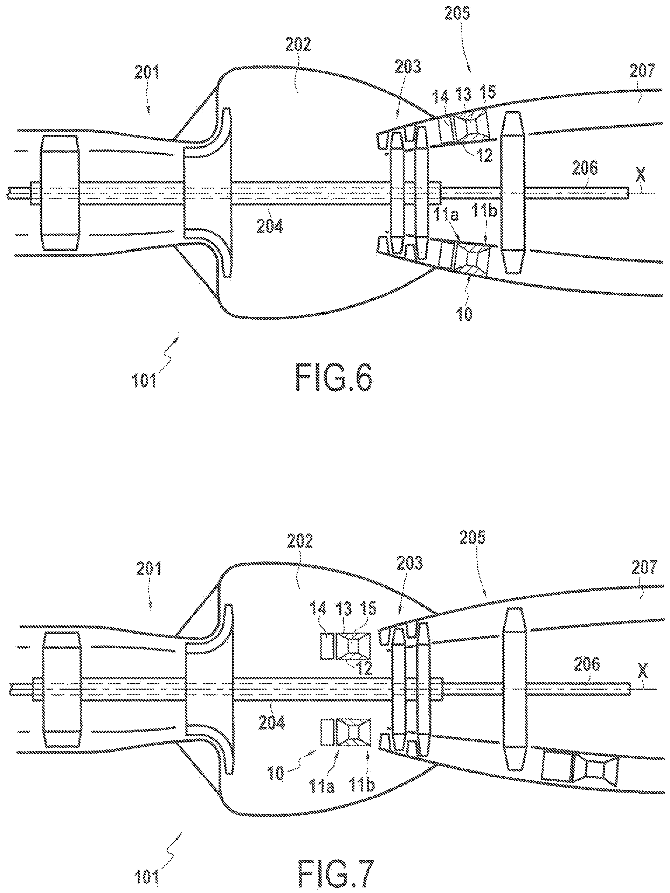

Bien que, dans le premier mode de réalisation, le générateur magnétohydrodynamique 10 soit situé en aval des deux turbines 203, 205, il est aussi envisageable de le situer entre les deux turbines 203, 205, comme dans le quatrième mode de réalisation illustré sur la figure 6, voire directement en aval de la chambre de combustion 202, en amont des deux turbines 203, 205, comme dans le cinquième mode de réalisation illustré sur la figure 7. Dans les deux cas, les éléments du générateur magnétohydrodynamique 10 restent analogues à ceux du premier mode de réalisation et reçoivent les mêmes repères sur les figures.

Le fonctionnement du générateur magnétohydrodynamique 10 suivant chacun de ces modes de réalisation est également similaire. Dans chaque cas, des gaz de combustion issus de la chambre de combustion 202 sont au moins partiellement ionisés par le dispositif d'ionisation 14, accélérés dans le segment convergent 11a de la veine d'écoulement 11, avant de pénétrer dans les canaux 16 délimités par chaque paire de bras 15, dans lesquels ils sont soumis aux champs magnétiques B générés par les électroaimants 18 en direction sensiblement perpendiculaire à celle de l'écoulement des gaz de combustion ionisés dans chaque canal 16, pour générer un courant électrique entre les électrodes 17, courant électrique pouvant notamment servir à alimenter différents dispositifs embarqués à bord de l'hélicoptère 1. En sortie des canaux 16, l'écoulement des gaz de combustion décélère dans le segment divergent 11b.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. Par exemple, bien que dans chacun des modes de réalisation illustrés chaque canal 16 ne soit équipé que d'une seule paire d'électrodes 17, il est aussi envisageable de placer plusieurs paires d'électrodes dans chaque canal, ces paires d'électrodes pouvant par exemple se succéder dans le sens d'écoulement du fluide de travail. En outre, ces générateurs magnétohydrodynamiques pourraient être utilisé dans d'autres types de turbomachines que les turbomoteurs illustrés. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Générateur magnétohydrodynamique (10) comprenant au moins :
une veine (11) d'écoulement d'un fluide de travail délimitée par une première paroi (12) et une deuxième paroi (13) ;
une paire de bras (15) reliant chacun les première et deuxième parois (12,13) de manière à délimiter entre lesdits bras (15) et lesdites parois (12,13) un canal (16) dans la veine d'écoulement (11) ;
un aimant pour générer un champ magnétique (B) orienté en direction perpendiculaire à l'écoulement du fluide de travail dans le canal (16) délimité par la paire de bras (15) et lesdites parois (12,13) ; et
au moins une paire d'électrodes (17), chacune des électrodes (17) de chaque paire étant disposée d'un côté du canal (16) délimité par la paire de bras (15) et lesdites parois (12,13), lesdites électrodes (17) de chaque paire étant espacées l'une par rapport à l'autre dans une direction perpendiculaire audit champ magnétique (B) et à l'écoulement du fluide de travail dans le canal (16) délimité par la paire de bras (15) et lesdites parois (12,13),
**caractérisé en ce que** le générateur magnétohydrodynamyque comprend un dispositif d'ionisation (14) du fluide de travail en amont de la paire de bras (15), ledit canal (16) étant disposé pour être traversé par une partie du fluide de travail après sa ionisation.

2. Générateur magnétohydrodynamique (10) suivant la revendication 1, dans lequel chaque électrode (17) de chaque paire d'électrodes (17) est disposée sur un bras (15) de ladite paire de bras (15).

3. Générateur magnétohydrodynamique (10) suivant la revendication 2, dans lequel l'aimant comprend un noyau (18c) logé à l'intérieur d'un desdits bras (15).

4. Générateur magnétohydrodynamique (10) suivant l'une quelconque des revendications précédentes, dans lequel les première et deuxième parois (12,13) convergent l'une vers l'autre dans un sens d'écoulement du fluide de travail sur au moins un premier segment (11a) de la veine d'écoulement (11) situé en amont de ladite paire de bras (15).

5. Générateur magnétohydrodynamique (10) suivant la revendication 4, dans lequel les première et deuxième parois (12,13) divergent l'une de l'autre dans un sens d'écoulement du fluide de travail sur au moins un deuxième segment de la veine d'écoulement situé en aval de ladite paire de bras.

6. Générateur magnétohydrodynamique (10) suivant l'une quelconque des revendications précédentes, dans lequel ledit dispositif d'ionisation (14) prend la forme d'une torche à plasma.

7. Générateur magnétohydrodynamique (10) suivant l'une quelconque des revendications précédentes, comprenant un dispositif d'injection d'éléments à bas potentiel d'ionisation en amont dudit dispositif d'ionisation (14).

8. Générateur magnétohydrodynamique (10) suivant l'une quelconque des revendications précédentes, comprenant une pluralité de paires de bras (15) reliant chacun les première et deuxième parois (12,13) en aval dudit dispositif d'ionisation (14) et, pour chaque paire de bras (15), un aimant et au moins une paire d'électrodes (17).

9. Générateur magnétohydrodynamique (10) suivant l'une quelconque des revendications précédentes, dans laquelle ladite veine d'écoulement (11) est annulaire, lesdites première et deuxième parois (12,13) étant concentriques autour d'un axe central (X) de la veine d'écoulement (11), et lesdits bras (15) étant radiaux.

10. Turbomachine comprenant au moins un générateur magnétohydrodynamique (10) suivant l'une quelconque des revendications précédentes, et au moins une turbine (203,205) disposée pour être actionnée par le même fluide de travail que le générateur magnétohydrodynamique (10).

11. Turbomachine suivant la revendication 10, comprenant une chambre de combustion (202) en amont de la turbine (203,205) et du générateur magnétohydrodynamique (10).

12. Turbomachine suivant la revendication 11, comprenant au moins un compresseur (201) en amont de la chambre de combustion (202) et une première turbine (203) qui est couplée audit compresseur (201) à travers un premier arbre rotatif (204) pour son actionnement.

13. Turbomachine suivant la revendication 12, comprenant une deuxième turbine (205).

14. Turbomachine suivant l'une quelconque des revendications précédentes, dans laquelle le générateur magnétohydrodynamique (10) est disposé dans une tuyère de sortie (207) en aval de la turbine (203).

15. Procédé magnétohydrodynamique de génération électrique dans lequel :
un fluide de travail est au moins partiellement ionisé par un dispositif d'ionisation (14) dans une veine d'écoulement (11) délimitée par une première et une deuxième paroi (12,13) ;
une partie ionisée du fluide de travail traverse un canal (16) délimité dans la veine d'écoulement (11) par lesdites parois (12,13) et une paire de bras (15) reliant chacun les première et deuxième parois (12,13) en aval dudit dispositif d'ionisation (14), et est soumise à un champ magnétique (B) généré par un aimant dans ce canal (16) en direction perpendiculaire à l'écoulement du fluide de travail, de manière à générer un courant électrique entre des électrodes (17) d'au moins une paire d'électrodes (17), chacune des électrodes (17) de chaque paire étant disposée d'un côté du canal (16) délimité par la paire de bras (15) et lesdites parois (12,13), lesdites électrodes (17) de chaque paire étant espacées l'une par rapport à l'autre dans une direction perpendiculaire audit champ magnétique (B) et à l'écoulement des gaz de combustion dans le canal (16).

## Patentansprüche

1. Magnetohydrodynamischer Generator (10), der mindestens umfasst:
einen Abflussdurchgang (11) eines Arbeitsfluids, der durch eine erste Wand (12) und eine zweite Wand (13) begrenzt ist,
ein Paar von Armen (15), die jeweils die erste und zweite Wand (12, 13) verbinden, um zwischen den Armen (15) und den Wänden (12, 13) einen Kanal (16) in dem Abflussdurchgang (11) zu begrenzen,
einen Magneten zum Erzeugen eines Magnetfelds (B), das in einer senkrechten Richtung zu dem Abfluss des Arbeitsfluids in dem Kanal (16) ausgerichtet ist, der durch das Paar von Armen (15) und die Wände (12, 13) begrenzt ist, und
mindestens ein Paar von Elektroden (17), wobei jede der Elektroden (17) von jedem Paar auf einer Seite des Kanals (16) angeordnet ist, der durch das Paar von Armen (15) und die Wände (12, 13) begrenzt ist, wobei die Elektroden (17) von jedem Paar in Bezug aufeinander in einer Richtung beabstandet sind, die zu dem Magnetfeld (B) und zu dem Abfluss des Arbeitsfluids in dem Kanal (16) senkrecht verläuft, der durch das Paar von Armen (15) und die Wände (12,13) begrenzt ist,
**dadurch gekennzeichnet, dass** der magnetohydrodynamische Generator eine Ionisierungsvorrichtung (14) des Arbeitsfluids vor dem Paar von Armen (15) umfasst, wobei der Kanal (16) angeordnet ist, um von einem Teil des Arbeitsfluids nach seiner Ionisierung durchquert zu werden.

2. Magnetohydrodynamischer Generator (10) nach Anspruch 1, wobei jede Elektrode (17) von jedem Paar von Elektroden (17) auf einem Arm (15) des Paars von Armen (15) angeordnet ist.

3. Magnetohydrodynamischer Generator (10) nach Anspruch 2, wobei der Magnet ein Joch (18c) umfasst, das sich im Inneren von einem der Arme (15) befindet.

4. Magnetohydrodynamischer Generator (10) nach einem der vorhergehenden Ansprüche, wobei die erste und zweite Wand (12, 13) in einer Richtung des Abflusses des Arbeitsfluids an mindestens einem ersten Segment (11a) des Abflussdurchgangs (11) zusammenlaufen, das sich vor dem Paar von Armen (15) befindet.

5. Magnetohydrodynamischer Generator (10) nach Anspruch 4, wobei die erste und zweite Wand (12, 13) in einer Richtung des Abflusses des Arbeitsfluids an mindestens einem zweiten Segment des Abflussdurchgangs auseinandergehen, das sich hinter dem Paar von Armen befindet.

6. Magnetohydrodynamischer Generator (10) nach einem der vorhergehenden Ansprüche, wobei die lonisierungsvorrichtung (14) die Form eines Plasmabrenners annimmt.

7. Magnetohydrodynamischer Generator (10) nach einem der vorhergehenden Ansprüche, der eine Injektionsvorrichtung von Elementen mit geringem Ionisierungspotential vor der lonisierungsvorrichtung (14) umfasst.

8. Magnetohydrodynamischer Generator (10) nach einem der vorhergehenden Ansprüche, der mehrere Paare von Armen (15), die jeweils die erste und zweite Wand (12, 13) hinter der lonisierungsvorrichtung (14) verbinden, und für jedes Paar von Armen (15) einen Magneten und mindestens ein Paar von Elektroden (17) umfasst.

9. Magnetohydrodynamischer Generator (10) nach einem der vorhergehenden Ansprüche, wobei der Abflussdurchgang (11) ringförmig ist, die erste und zweite Wand (12, 13) um eine Mittelachse (X) des Abflussdurchgangs (11) konzentrisch sind, und die Arme (15) radial sind.

10. Turbomaschine, die mindestens einen magnetohydrodynamischen Generator (10) nach einem der vorhergehenden Ansprüche, und mindestens eine Turbine (203, 205) umfasst, die angeordnet ist, um von demselben Arbeitsfluid angetrieben zu werden wie der magnetohydrodynamische Generator (10).

11. Turbomaschine nach Anspruch 10, die eine Brennkammer (202) vor der Turbine (203,205) und dem magnetohydrodynamischen Generator (10) umfasst.

12. Turbomaschine nach Anspruch 11, die mindestens einen Verdichter (201) vor der Brennkammer (202) und eine erste Turbine (203) umfasst, welche an den Verdichter (201) über eine erste Drehwelle (204) für dessen Antrieb gekoppelt ist.

13. Turbomaschine nach Anspruch 12, die eine zweite Turbine (205) umfasst.

14. Turbomaschine nach einem der vorhergehenden Ansprüche, wobei der magnetohydrodynamische Generator (10) in einer Auslassdüse (207) hinter der Turbine (203) angeordnet ist.

15. Magnetohydrodynamisches Verfahren zur Stromerzeugung, wobei:
ein Arbeitsfluid zumindest teilweise durch eine Ionisierungsvorrichtung (14) in einem Abflussdurchgang (11) ionisiert wird, der durch eine erste und eine zweite Wand (12, 13) begrenzt ist,
ein ionisierter Teil des Arbeitsfluids einen Kanal (16) durchquert, der in dem Abflussdurchgang (11) durch die Wände (12, 13) und ein Paar von Armen (15) begrenzt ist, die jeweils die erste und zweite Wand (12, 13) hinter der lonisierungsvorrichtung (14) verbinden, und einem Magnetfeld (B) unterworfen ist, das von einem Magneten in diesem Kanal (16) in einer senkrechten Richtung zu dem Abfluss des Arbeitsfluids erzeugt wird, um einen elektrischen Strom zwischen den Elektroden (17) von mindestens einem Paar von Elektroden (17) zu erzeugen, wobei jede der Elektroden (17) von jedem Paar auf einer Seite des Kanals (16) angeordnet ist, der durch das Paar von Armen (15) und die Wände (12, 13) begrenzt ist, wobei die Elektroden (17) von jedem Paar in Bezug aufeinander in einer Richtung beabstandet sind, die zu dem Magnetfeld (B) und zu dem Abfluss der Verbrennungsgase in dem Kanal (16) senkrecht verläuft.

## Claims

1. A magnetohydrodynamic generator (10) comprising at least:
a working fluid flow passage (11) that is defined by a first wall (12) and a second wall (13);
a pair of arms (15), each connecting together the first and second walls (12, 13) downstream from said ionizing device (14) so as to define, within the flow passage (11), a channel (16) between said arms (15) and said walls (12, 13;
a magnet for generating a magnetic field (B) oriented in a direction that is perpendicular to the flow of the working fluid through the channel (16) defined by the pair of arms (15) and said walls (12, 13); and
at least one pair of electrodes (17), each of the electrodes (17) in each pair being arranged on a respective side of the channel (16) defined by the pair of arms (15) and said walls (12, 13), said electrodes (17) in each pair being spaced apart from each other in a direction that is perpendicular to said magnetic field (B) and to the flow direction of the working fluid through the channel (16) defined by the pair of arms (15) and by said walls (12, 13), **characterized in that** the magnetohydrodynamic generator comprises an ionizing device (14) for ionizing the working fluid upstream from the pair of arms (15), said channel (16) being arranged to be traversed by a portion of the working fluid after it has been ionized.

2. A magnetohydrodynamic generator (10) according to claim 1, wherein each electrode (17) of each pair of electrodes (17) is arranged on an arm (15) of said pair of arms (15).

3. A magnetohydrodynamic generator (10) according to claim 2, wherein the magnet includes a core (18c) housed inside one of said arms (15).

4. A magnetohydrodynamic generator (10) according to any preceding claim, wherein the first and second walls (12, 13) converge towards each other in a flow direction of the working fluid over at least a first segment (11a) of the flow passage (11) situated upstream from said pair of arms (15).

5. A magnetohydrodynamic generator (10) according to claim 4, wherein the first and second walls (12, 13) diverge from each other in the flow direction of the working fluid over at least one second segment of the flow passage situated downstream from said pair of arms.

6. A magnetohydrodynamic generator (10) according to any preceding claim, wherein said ionizing device (14) is in the form of a plasma torch.

7. A magnetohydrodynamic generator (10) according to any preceding claim, including a device for injecting elements of low ionization potential upstream from said ionizing device (14).

8. A magnetohydrodynamic generator (10) according to any preceding claim, including a plurality of pairs of arms (15), each connecting together the first and second walls (12, 13) downstream from said ionizing device (14), and for each pair of arms (15), including a respective magnet and at least one pair of electrodes (17).

9. A magnetohydrodynamic generator (10) according to any preceding claim, wherein said flow passage (11) is annular, said first and second walls (12, 13) being coaxial about a central axis (X) of the flow passage (11), and said arms (15) being radial.

10. A turbomachine including at least one magnetohydrodynamic generator (10) according to any preceding claim, and at least one turbine (203, 205) arranged to be driven by the same working fluid as the magnetohydrodynamic generator (10).

11. A turbomachine according to claim 10, including a combustion chamber (202) upstream from the turbine (203, 205) and from the magnetohydrodynamic generator (10).

12. A turbine engine according to claim 11, including at least one compressor (201) upstream from the combustion chamber (202) and a first turbine (203) that is coupled to said compressor (201) via a first rotary shaft (204) in order to drive it.

13. A turbine engine according to claim 12, including a second turbine (205).

14. A turbine engine according to any preceding claim, wherein the magnetohydrodynamic generator (10) is arranged in an outlet nozzle (207) downstream from the turbine (203) .

15. A magnetohydrodynamic method of generating electricity, wherein:
a working fluid is ionized at least in part by an ionizing device (14) in a flow passage (11) defined by first and second walls (12, 13); and
an ionized portion of the working fluid passes through a channel (16) defined in the flow passage (11) by said walls (12, 13) and by a pair of arms (15), each connecting together the first and second walls (12, 13) downstream from said ionizing device (14), and is subjected to a magnetic field (B) generated by a magnet, the field extending in the channel (16) in a direction perpendicular to the flow of the working fluid so as to generate an electric current between the electrodes (17) of at least one pair of electrodes (17), each of the electrodes (17) of each pair being arranged on a respective side of the channel (16) defined by the pair of arms (15) and said walls (12, 13), said electrodes (17) of each pair being spaced apart from each other in a direction that is perpendicular both to said magnetic field (B) and to the flow of combustion gas in the channel (16).
